(19) Europäisches Patentamt
European Patent Office
Office européen des brevets

(11) EP 4 687 180 A1

(12) EUROPEAN PATENT APPLICATION

(43) Date of publication:
**04.02.2026 Bulletin 2026/06**

(21) Application number: **25174426.4**

(22) Date of filing: **06.05.2025**

(51) International Patent Classification (IPC):
***H01M 4/131*** (2010.01) ***H01M 4/133*** (2010.01)
***H01M 4/134*** (2010.01) ***H01M 10/0525*** (2010.01)
***H01M 10/0564*** (2010.01) ***H01M 10/0567*** (2010.01)
***H01M 4/505*** (2010.01) ***H01M 4/525*** (2010.01)
***H01M 4/587*** (2010.01) *H01M 10/42* (2006.01)

(52) Cooperative Patent Classification (CPC):
**H01M 4/131; H01M 4/133; H01M 4/134; H01M 4/587; H01M 10/0525; H01M 10/0567; H01M 10/4235;** H01M 4/505; H01M 4/525; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.08.2024 KR 20240103317**

(71) Applicant: **SAMSUNG SDI CO., LTD.**
**Yongin-si, Gyeonggi-do 17084 (KR)**

(72) Inventors:
- **Kim, Sohee**
  **17084 Yongin-si, Gyeonggi-do (KR)**
- **Choi, Hyunbong**
  **17084 Yongin-si, Gyeonggi-do (KR)**
- **Park, Sangwoo**
  **17084 Yongin-si, Gyeonggi-do (KR)**
- **Ji, Woojung**
  **17084 Yongin-si, Gyeonggi-do (KR)**
- **Park, Hongryeol**
  **17084 Yongin-si, Gyeonggi-do (KR)**
- **Yang, Yeji**
  **17084 Yongin-si, Gyeonggi-do (KR)**
- **Jun, Dasol**
  **17084 Yongin-si, Gyeonggi-do (KR)**
- **Shin, Youngkyeong**
  **17084 Yongin-si, Gyeonggi-do (KR)**
- **Kim, Sanghoon**
  **17084 Yongin-si, Gyeonggi-do (KR)**
- **Tasy, Olga**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) ELECTROLYTE FOR RECHARGEABLE LITHIUM BATTERY AND RECHARGEABLE LITHIUM BATTERY INCLUDING THE SAME

(57) Disclosed are electrolytes and rechargeable lithium batteries. The electrolyte includes a non-aqueous organic solvent, a lithium salt, a first additive represented by Chemical Formula 1, and a second additive represented by Chemical Formula 2. A rechargeable lithium battery includes: a positive electrode that includes a positive electrode active material; a negative electrode that includes a negative electrode active material; and the electrolyte described herein.



Processed by Luminess, 75001 PARIS (FR)

## Description

### BACKGROUND

Embodiments of the present disclosure relate to an electrolyte for a rechargeable lithium battery and a rechargeable lithium battery including the same.

Recently, with the rapid spread of battery using electronic devices, such as mobile phones, laptop computers, and electric vehicles, there is a rapidly increasing demand for rechargeable batteries having high energy density and high capacity. Therefore, intensive research has been conducted to improve performance of rechargeable lithium batteries.

A rechargeable lithium battery may include a positive electrode, a negative electrode, and an electrolyte, which positive and negative electrodes may include an active material in which intercalation and deintercalation of lithium is possible, and may generate electrical energy caused by oxidation and reduction reactions if (e.g., when) lithium ions are intercalated and deintercalated.

A lithium salt dissolved in a non-aqueous organic solvent may be used as the electrolyte of the rechargeable lithium battery. Characteristics of the rechargeable lithium battery are exhibited by complex reactions between the positive electrode and the electrolyte and between the negative electrode and the electrolyte. Accordingly, the use of a suitable or appropriate electrolyte is one variable for improvement of the rechargeable lithium battery.

### SUMMARY

The invention is defined by the appended claims. The description that follows is subjected to this limitation. Any disclosure lying outside the scope of said claims is only intended for illustrative as well as comparative purposes.

An embodiment of the present disclosure provides an electrolyte for a rechargeable lithium battery having improved stability and cycle-life characteristics at high temperatures.

An embodiment of the present disclosure provides a rechargeable lithium battery including the electrolyte.

According to an embodiment of the present disclosure, an electrolyte for a rechargeable lithium battery includes: a non-aqueous organic solvent; a lithium salt; a first additive represented by Chemical Formula 1; and a second additive represented by Chemical Formula 2.

Chemical Formula 1

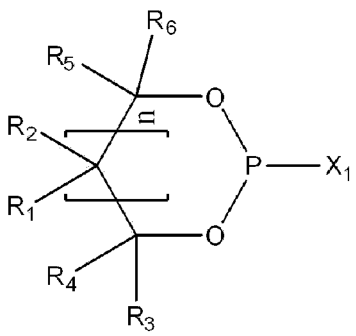

Chemical Formula 2

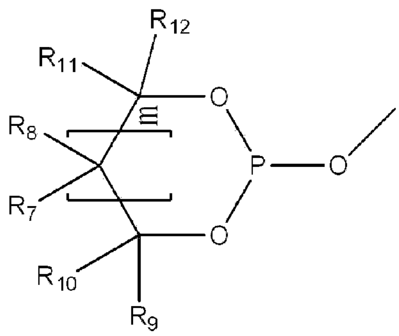

In Chemical Formula 1,

$X_1$ is a fluoro group, a chloro group, a bromo group, or an iodo group.

$R_1$ to $R_6$ may each independently be hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

n is an integer of 0 or 1.

In Chemical Formula 2,

$R_7$ to $R_{12}$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

m is an integer of 0 or 1.

According to an embodiment of the present disclosure, a rechargeable lithium battery includes: a positive electrode that includes a positive electrode active material; a negative electrode that includes a negative electrode active material; and the electrolyte described herein.

## BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.

FIG. 1 is a simplified conceptual diagram showing a rechargeable lithium battery according to an embodiment of the present disclosure.

FIGS. 2-5 are simplified diagrams showing rechargeable lithium batteries according to embodiments of the present disclosure.

## DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following example embodiments, and may be implemented in various suitable forms. Rather, the exemplary embodiments are provided only to disclose the present disclosure and let those skilled in the art fully know the scope of the present disclosure.

In this description, it will be understood that, if (e.g., when) an element is referred to as being on another element, the element can be directly on the other element or intervening elements may be present between therebetween. In the drawings, thicknesses of some components may be exaggerated to explain the technical contents of the present disclosure. Like reference numerals refer to like elements throughout the specification.

Unless otherwise specially noted in this description, the expression of singular form may include the expression of plural form. The terms "comprises/includes" and/or "comprising/including" used in this disclosure do not exclude the presence or addition of one or more other components.

As used herein, the term "combination thereof" may refer to a mixture, a stack, a composite, a copolymer, an alloy, a blend, and/or a reaction product.

In this description, unless otherwise separately defined, the term "substituted" indicates that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

In more detail, the term "substituted" may indicate that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may indicate that at least one hydrogen of a substituent or a compound is substituted by deuterium, a halogen group, a C1 to C20 alkyl group, a C6 to C30 aryl group, a C1 to C10 fluoroalkyl group, or a cyano group. In embodiments, the term "substituted" may indicate that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may indicate that at least one hydrogen of a substituent or a compound is substituted by deuterium, a cyano group, a halogen group, a methyl

group, an ethyl group, a propyl group, a butyl group, a phenyl group, a biphenyl group, a terphenyl group, a trifluoromethyl group, or a naphthyl group.

FIG. 1 is a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated with the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 or the negative electrode 20.

## Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive material (e.g., an electrically conductive material).

For example, the positive electrode 10 may further include an additive that can serve as a sacrificial positive electrode.

An amount of the positive electrode active material may be 90 wt% to 99.5 wt% relative to 100 wt% of the positive electrode active material layer AML1. An amount of each of the binder and the conductive material may be 0.5 wt% to 5 wt% relative to 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material may be used to provide an electrode with conductivity (e.g., electrical conductivity) or to increase electrical conductivity of the electrode, and any suitable conductive material that does not cause a chemical change in a battery (e.g., that does not cause an undesirable chemical change in the rechargeable lithium battery) may be used as the conductive material. The conductive material may include, for example, a carbon-based material such as natural graphite, artificial graphite, carbon black, acetylene black, Ketjen black, carbon fiber, carbon nano-fiber, and/or carbon nano-tube; a metal powder and/or metal fiber containing one or more of copper, nickel, aluminum, and/or silver; a conductive polymer (e.g., an electrically conductive polymer) such as a polyphenylene derivative; or a mixture thereof.

Aluminum (Al) may be used as the current collector COL1, but the present disclosure is not limited thereto.

## Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from cobalt, manganese, nickel, and a combination thereof.

The composite oxide may include lithium transition metal composite oxide, for example, lithium-nickel-based oxide, lithium-cobalt-based oxide, lithiummanganese-based oxide, lithium-iron-phosphate-based compounds, cobalt-free nickelmanganese-based oxide, or a combination thereof.

For example, the positive electrode active material may include a compound represented by one of chemical formulae below. $Li_aA_{1-b}X_bO_{2-c}D_c$ (where $0.90 \le a \le 1.8$, $0 \le b \le 0.5$, and $0 \le c \le 0.05$); $Li_aMn_{2-b}X_bO_{4-c}D_c$ (where $0.90 \le a \le 1.8$, $0 \le b \le 0.5$, and $0 \le c \le 0.05$); $Li_aNi_{1-b-c}Co_bX_cO_{2-\alpha}D_\alpha$ (where $0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}D_\alpha$ (where $0.90 \le a \le 1.8$, $0 \le b \le 0.5$, $0 \le c \le 0.5$, and $0 < \alpha < 2$); $Li_aNi_bCo_cL^1_dGeO_2$ (where $0.90 \le a \le 1.8$, $0 \le b \le 0.9$, $0 \le c \le 0.5$, $0 \le d \le 0.5$, and $0 \le e \le 0.1$); $Li_aNiG_bO_2$ (where $0.90 \le a \le 1.8$ and $0.001 \le b \le 0.1$); $Li_aCoG_bO_2$ (where $0.90 \le a \le 1.8$ and $0.001 \le b \le 0.1$); $Li_aMn_{1-b}G_bO_2$ (where $0.90 \le a \le 1.8$ and $0.001 \le b \le 0.1$); $Li_aMn_2G_bO_4$ (where $0.90 \le a \le 1.8$ and $0.001 \le b \le 0.1$); $Li_aMn_{1-g}G_gPO_4$ (where $0.90 \le a \le 1.8$ and $0 \le g \le 0.5$); $Li_{(3-f)}Fe_2(PO_4)_3$ (where $0 \le f \le 2$); and $Li_aFePO_4$ (where $0.90 \le a \le 1.8$).

In the chemical formulae above, A is Ni, Co, Mn, or a combination thereof, X is Al, Ni, Co, Mn, Cr, Fe, Mg, Sr, V, a

rare-earth element, or a combination thereof, D is O, F, S, P, or a combination thereof, G is Al, Cr, Mn, Fe, Mg, La, Ce, Sr, V, or a combination thereof, and $L^1$ is Mn, Al, or a combination thereof.

For example, the positive electrode active material may be a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include a negative electrode active material of 90 wt% to 99 wt%, a binder of 0.5 wt% to 5 wt%, and a conductive material (e.g., an electrically conductive material) of 0 wt% to 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

If (e.g., when) an aqueous binder is used as the negative electrode binder, a cellulose-based compound capable of providing or increasing viscosity may further be included. The cellulose-based compound may include one or more of carboxymethyl cellulose, hydroxypropylmethyl cellulose, methyl cellulose, and/or alkali metal salts thereof. The alkali metal may include Na, K, and/or Li.

The dry binder may include a fibrillizable polymer material, for example, polytetrafluoroethylene, polyvinylidene fluoride, polyvinylidene fluoridehexafluoropropylene copolymer, polyethylene oxide, or a combination thereof.

The conductive material may be used to provide an electrode with conductivity (e.g., electrical conductivity) or to increase electrical conductivity of the electrode, and any suitable conductive material that does not cause a chemical change in a battery (e.g., does not cause an undesirable chemical change in the rechargeable lithium battery) may be used as the conductive material. For example, the conductive material may include a carbon-based material such as natural graphite, artificial graphite, carbon black, acetylene black, Ketjen black, carbon fiber, carbon nano-fiber, and/or carbon nano-tube; a metal powder and/or metal fiber including one or more of copper, nickel, aluminum, and/or silver; a conductive polymer (e.g., an electrically conductive polymer) such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal, or a combination thereof.

## Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, and/or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, and/or fiber-shaped natural and/or artificial graphite, and the amorphous carbon may include soft carbon, hard carbon, mesophase pitch carbon, and/or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material and/or

a Sn-based negative electrode active material. The Si-based negative electrode active material may include silicon, silicon-carbon composite, SiOx (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) on a surface of the secondary particle. The amorphous carbon may also be between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer on a surface of the core.

The Si-based negative electrode active material and/or the Sn-based negative electrode active material may be used in combination with a carbon-based negative electrode active material.

**Separator 30**

Based on a type (or kind) of the rechargeable lithium battery, the separator 30 may be between positive electrode 10 and the negative electrode 20. The separator 30 may include one or more selected from among polyethylene, polypropylene, and polyvinylidene fluoride, and may have a multi-layered separator thereof such as a polyethylene/polypropylene bi-layered separator, a polyethylene/polypropylene/polyethylene tri-layered separator, and/or a polypropylene/polyethylene/polypropylene tri-layered separator.

The separator 30 may include a porous substrate and a coating layer on one or opposite surfaces of the porous substrate, which coating layer includes an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer and/or a (meth)acrylic copolymer.

The inorganic material may include an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be present mixed in one coating layer or may be present as a stack of a coating layer including the organic material and a coating layer including an inorganic material.

**Electrolyte ELL**

The electrolyte ELL for a rechargeable lithium battery includes a non-aqueous organic solvent and a lithium salt.

The non-aqueous organic solvent may serve as a medium that transmits ions that participate in an electrochemical reaction of the battery.

The non-aqueous organic solvent may include a carbonate-based solvent, an ester-based solvent, an ether-based solvent, a ketone-based solvent, an alcoholbased solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcoholbased solvent may include ethyl alcohol and/or isopropyl alcohol. The aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1,4-dioxolane; and/or sulfolanes.

The non-aqueous organic solvent may be used alone or in a mixture of two or more substances.

In embodiments, if (e.g., when) a carbonate-based solvent is used, a cyclic carbonate and a chain carbonate may be mixed and used, and the cyclic carbonate and the chain carbonate may be mixed in a volume ratio of 1:1 to 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

### Rechargeable Lithium Battery

Based on a shape of a rechargeable lithium battery, the rechargeable lithium battery may be classified into cylindrical, prismatic, pouch, and coin types (or kinds). In FIGS. 2-5 are simplified diagrams showing rechargeable lithium batteries according to embodiments, FIG. 2 shows a cylindrical battery, FIG. 3 shows a prismatic battery, and FIGS. 4-5 show pouch-type batteries. Referring to FIGS. 2-4, a rechargeable lithium battery 100 may include an electrode assembly 40 in which a separator 30 is between a positive electrode 10 and a negative electrode 20, and may also include a casing 50 in which the electrode assembly 40 is accommodated. The positive electrode 10, the negative electrode 20, and the separator 30 may be impregnated with an electrolyte solution. The rechargeable lithium battery 100 may include a sealing member 60 that seals the casing 50 as illustrated in FIG. 2. In embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4-5, the rechargeable lithium battery 100 may include an electrode tab 70 (FIG. 5), or a positive electrode tab 71 and a negative electrode tab 72 (FIG. 4), which electrode tab 70 serves as an electrical path for externally inducing a current generated in the electrode assembly 40.

The following will describe in more detail an electrolyte for a rechargeable lithium battery according to some embodiments of the present disclosure.

An electrolyte for a rechargeable lithium battery includes a non-aqueous organic solvent, a lithium salt, a first additive represented by Chemical Formula 1, and a second additive represented by Chemical Formula 2.

The electrolyte may be prepared by a mixing process in which the lithium salt is dissolved in the non-aqueous organic solvent, and the first additive and the second additive are added to mix. The electrolyte mixing process may be any suitable one generally used in the electrolyte fabrication field, and a person skilled in the art will be able to suitably or appropriately select and use an electrolyte mixing process upon reviewing this disclosure.

The non-aqueous organic solvent may include at least one selected from ethylene carbonate (EC), ethylmethyl carbonate (EMC), dimethyl carbonate (DMC), propylene carbonate (PC), propyl propionate (PP), diethyl carbonate (DEC), dipropyl carbonate (DPC), methylpropyl carbonate (MPC), ethylpropyl carbonate (EPC), methylethyl carbonate (MEC), and butylene carbonate (BC).

In an embodiment, the non-aqueous organic solvent may be a mixed solvent of ethylene carbonate (EC), ethylmethyl carbonate (EMC), and dimethyl carbonate (DMC).

For example, the ethylene carbonate (EC) may be included in an amount of 10 vol% to 30 vol% relative to the total volume of the non-aqueous organic solvent. The ethylmethyl carbonate (EMC) may be included in an amount of 20 vol% to 70 vol% relative to the total volume of the non-aqueous organic solvent. The dimethyl carbonate (DMC) may be included in an amount of 20 vol% to 70 vol% relative to the total volume of the non-aqueous organic solvent.

The lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$, lithium bis(fluorosulfonyl)imide (LiFSI), and $LiC_4F_9SO_3$. According to an embodiment, the lithium salt may include $LiPF_6$.

The lithium salt may have a concentration of 0.1 M to 2.0 M. For example, the lithium salt may have a concentration of equal to or greater than 0.5 M or equal to or greater than 1.0 M. The lithium salt may have a concentration of equal to or less than 2.0 M, equal to or less than 1.7 M, or equal to or less than 1.5 M. In embodiments of the present disclosure, if (e.g., when) the lithium salt has a concentration of 0.1 M to 2.0 M, the electrolyte may suitably or appropriately maintain its conductivity (e.g., electrical conductivity) and viscosity.

### First Additive

The first additive according to the present disclosure is represented by Chemical Formula 1.

Chemical Formula 1

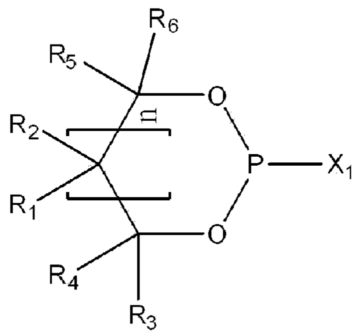

In Chemical Formula 1, $X_1$ is a fluoro group, a chloro group, a bromo group, or an iodo group.

In Chemical Formula 1, $R_1$ and $R_6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

The subscript n is an integer of 0 or 1. The subscript n being zero indicates presence of a direct bond (e.g., a single covalent bond). For example, if n is zero, a cyclic phospholane derivative portion containing an -OPO- functional group is a pentagonal ring.

Chemical Formula 1 may be represented by Chemical Formula 1A or 1B.

Chemical Formula 1A

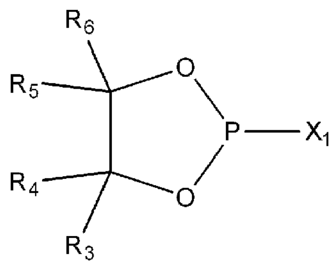

Chemical Formula 1B

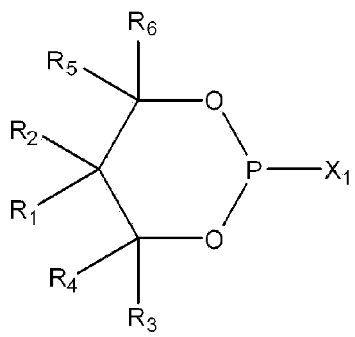

In Chemical Formulae 1A and 1B, $X_1$ is a fluoro group, a chloro group, a bromo group, or an iodo group.

In Chemical Formulae 1A and 1B, $R_1$ to $R_6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, Chemical Formula 1 may be represented by Chemical Formula 1A. In Chemical Formula 1A, $R_3$ and $R_4$ may each be hydrogen, and at least one selected from $R_5$ and $R_6$ may be a substituted or unsubstituted C1 to C10 alkyl group. In embodiments, in Chemical Formula 1A, $R_3$, $R_4$, $R_5$, and $R_6$ may each be hydrogen.

For example, the first additive represented by Chemical Formula 1 may be at least one selected from compounds

listed in Group 1, and for example, may be at least one selected from 2-fluoro-1,3,2-dioxaphospholane and 2-fluoro-4-methyl-1,3,2-dioxaphospholane.

Group 1

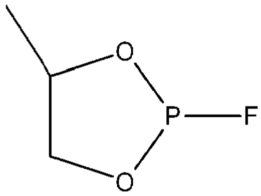

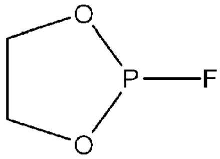

In an embodiment, the first additive represented by Chemical Formula 1 may be a compound of Chemical Formula 1A-1.

Chemical Formula 1A-1

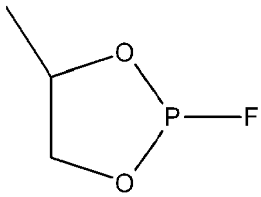

The first additive may be included in an amount of 0.01 wt% to 5 wt% relative to the total weight of the electrolyte. For example, the first additive may be included in an amount of equal to or greater than 0.1 wt% relative to the total weight of the electrolyte. The first additive may be included in an amount of equal to or less than 4 wt%, equal to or less than 3 wt%, or equal to or less than 1 wt% relative to the total weight of the electrolyte. If (e.g., when) the amount of the first additive falls within the ranges above, it may be possible to achieve a rechargeable lithium battery with improved cycle-life and output characteristics.

The first additive may form a solid electrolyte interface (SEI) layer having excellent high-temperature stability and improved ion conductivity on the surface of a negative electrode and suppress or reduce a side reaction of $LiPF_6$ caused by $-PO_2F$ functional group, thereby reducing gas generation resulting from a decomposition reaction of the electrolyte at high-temperature storage.

For example, the first additive may form a complex by being coordinated with thermal decomposition products of a lithium salt such as $LiPF_6$ or with anions dissociated from a lithium salt. The formation of the complex may stabilize the thermal decomposition products of a lithium salt or the anions dissociated from a lithium salt, and may thus suppress or reduce undesired side reactions between the electrolyte and these substances.

There may thus be an improvement in cycle-life characteristics of a rechargeable lithium battery and also a prevention or reduction of gas generation within a rechargeable lithium battery, thereby significantly reducing failure rates and remarkably improving high-temperature characteristics.

**Second Additive**

The second additive according to embodiments of the present disclosure is represented by Chemical Formula 2.

Chemical Formula 2

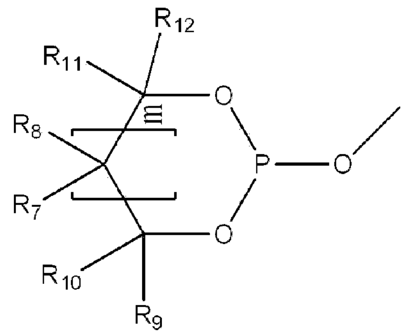

In Chemical Formula 2, $R_7$ to $R_{12}$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

The subscript m is an integer 0 or 1. The subscript m being zero indicates presence of a direct bond (e.g., a single covalent bond). For example, if n is zero, a cyclic phospholane derivative portion containing a -OPO- functional group is a pentagonal ring.

In an embodiment, Chemical Formula 2 above may be represented by Chemical Formula 2A or 2B.

Chemical Formula 2A

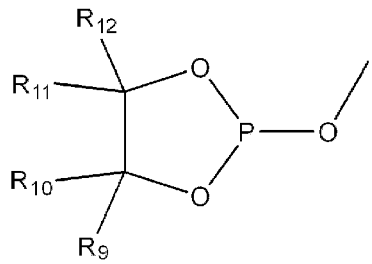

Chemical Formula 2B

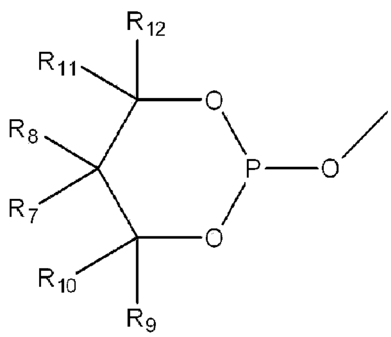

In Chemical Formulae 2A and 2B, $R_7$ to $R_{12}$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, Chemical Formula 2 may be represented by Chemical Formula 2A. In Chemical Formula 2A, $R_9$ to $R_{12}$ may each be hydrogen.

For example, Chemical Formula 2 may be represented by Chemical Formula 2B. In Chemical Formula 2B, $R_7$ to $R_{12}$ may each be hydrogen.

In an embodiment, the second additive represented by Chemical Formula 2 may be a compound of Chemical Formula 2A-1 or 2B-1.

Chemical Formula 2A-1

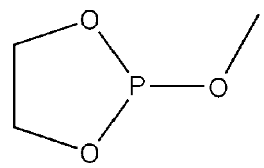

Chemical Formula 2B-1

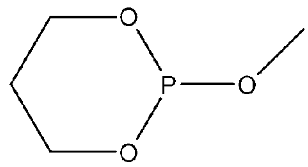

For example, the second additive represented by Chemical Formula 2 may be at least one selected from 2-methoxy-1,3,2-dioxaphospholane and 2-methoxy-1,3,2-dioxaphosphinane.

The second additive may form a solid electrolyte interface (SEI) layer having excellent high-temperature stability and improved ion conductivity on the surface of a negative electrode through a cyclic phospholane derivative including containing an - OPO- functional group, and may suppress or reduce a side reaction of $LiPF_6$ caused by a methoxy group combined with the derivative, thereby reducing gas generation resulting from a decomposition reaction of the electrolyte at high-temperature storage.

The second additive may be included in an amount of 0.01 wt% to 5 wt% relative to the total weight of the electrolyte. For example, the second additive may be included in an amount of equal to or greater than 0.1 wt% relative to the total weight of the electrolyte. The second additive may be included in an amount of equal to or less than 4 wt%, equal to or less than 3 wt%, or equal to or less than 1 wt% relative to the total weight of the electrolyte.

If (e.g., when) the amount of the second additive falls within the ranges above, it may be possible to maximize or increase suppression or reduction of resistance (e.g., electrical resistance) increase at high temperatures and storage effect at high temperatures.

If (e.g., when) the second additive is used in combination with an additive (e.g., the first additive) including a $-PO_2F$ functional group. The combination of the first additive and the second additive may cause not only an increase in high-temperature storage performance of a lithium battery but also an improvement in high-temperature and room-temperature cycle stability of a lithium battery.

For example, the electrolyte according to the present disclosure may maximize or increase the suppression or reduction of side reactions of $LiPF_6$ with the help of a $-PO_2F$ functional group present in the first additive and a methoxy group present in the second additive, thereby effectively improving cycle-life characteristics and stability under high temperatures during the activation of a rechargeable lithium battery.

According to an embodiment, an amount ratio of the second additive to the first additive may range from 1:5 to 5:1. If (e.g., when) the amount ratio of the second additive to the first additive is less than the range above, there may be a slight suppression or reduction of resistance (e.g., electrical resistance) at high temperatures, and if (e.g., when) the amount ratio of the second additive to the first additive is greater than the range above, there may be an abrupt reduction in cycle-life efficiency of a rechargeable lithium battery.

In an embodiment of the present disclosure, a rechargeable lithium battery includes a positive electrode that includes a positive electrode active material, a negative electrode that includes a negative electrode active material, and an electrolyte, and the electrolyte includes a non-aqueous organic solvent, a lithium salt, a first additive represented by Chemical Formula 1, and a second additive represented by Chemical Formula 2.

The rechargeable lithium battery may be applied to automotive vehicles, mobile phones, and/or any other suitable electrical devices, but the present disclosure is not limited thereto.

The positive electrode active material may include lithium composite oxide represented by Chemical Formula 3.

Chemical Formula 3 $$Li_xM^1_yM^2_zM^3_{1-y-z}O_{2-a}X_a$$

In Chemical Formula 3,

$0.5 \le x \le 1.8$, $0 \le a \le 0.05$, $0 < y \le 1$, $0 \le z \le 1$, and $0 \le y+z \le 1$.

$M^1$, $M^2$, and $M^3$ may each independently include at least one element selected from metals such as Ni, Co, Mn, Al,

B, Ba, Ca, Ce, Cr, Fe, Mo, Nb, Si, Sr, Mg, Ti, V, W, Zr, La, and a combination thereof.

X may include at least one element selected from F, S, P, and Cl.

In an embodiment, in Chemical Formula 3, $M^1$ may be Ni, y may be $0.8 \le y \le 1$, and z may be $0 \le z \le 0.2$. In an embodiment, the positive electrode active material may include lithium-iron-phosphate-based oxide.

The negative electrode active material may include at least one selected from graphite and a silicon composite.

If (e.g., when) the negative electrode active material includes both a silicon composite and graphite, the silicon composite and the graphite may be included in the form of a mixture, and in embodiments, the silicon composite and the graphite may be included in a weight ratio of 1:99 to 50:50. For example, the silicon composite and the graphite may be included in a weight ratio of 3:97 to 20:80 or 5:95 to 20:80.

The silicon composite may include a core including silicon-based particles and an amorphous carbon coating layer, and the silicon-based particle may include at least one selected from a silicon-carbon composite, SiOx (where $0<x<2$), and a silicon alloy. For example, the silicon-carbon composite may include a core including silicon particles and crystalline carbon, and may also include an amorphous carbon coating layer on a surface of the core.

The crystalline carbon may include graphite, for example, natural graphite, artificial graphite, or a mixture thereof.

The following will describe embodiments and comparative examples of the present disclosure. The following embodiments, however, are merely examples, and the present disclosure is not limited to embodiments discussed below.

**Embodiment and Comparative**

**Embodiment 1**

**(1) Preparation of Electrolyte**

1.5 M of $LiPF_6$ was dissolved in a non-aqueous organic solvent containing ethylene carbonate (EC), ethylmethyl carbonate (EMC), and dimethyl carbonate (DMC) mixed in a volume ratio of 20:40:40, 0.5 wt% of a first additive, and 0.5 wt% of a second additive were added to prepare an electrolyte.

A material represented by Chemical Formula 1A-1 was used as the first additive. A material represented by Chemical Formula 2A-1 was used as the second additive.

Chemical Formula 1A-1

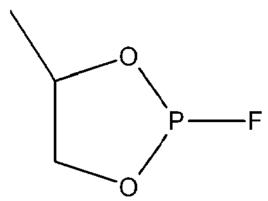

Chemical Formula 2A-1

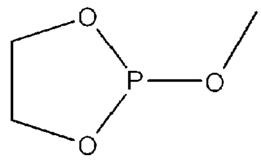

(2) Fabrication of Rechargeable Lithium Battery

$LiFePO_4$ as a positive electrode active material, polyvinylidene fluoride as a binder, and acetylene black as a conductive material were mixed in a weight ratio of 96:3:1, and the mixture was dispersed in N-methyl pyrrolidone to prepare a positive electrode active material slurry.

The positive electrode active material slurry was coated on an Al foil of 15 μm in thickness, dried at 100 °C, and then pressed to manufacture a positive electrode.

Artificial graphite and silicon nano-particles mixed in a weight ratio of 93:7 as a negative electrode active material, styrene-butadiene rubber (SBR) as a binder, and carboxymethyl cellulose (CMC) as a thickener were mixed in a weight ratio of 98:1:1, and the mixture was distributed in distilled water to prepare a negative electrode active material slurry.

The negative electrode active material slurry was coated on a Cu foil of 10 μm in thickness, dried at 100 °C, and

then pressed to manufacture a negative electrode.

The positive electrode, the negative electrode, and a polyethylene separator of 10 μm in thickness were assembled to manufacture an electrode assembly, and the electrolyte was introduced to fabricate a rechargeable lithium battery.

## Embodiment 2

An electrolyte and a rechargeable lithium battery were each fabricated according to substantially the same method as that in Embodiment 1, except that $Li(NiCoAl)O_2$ was used as the positive electrode active material.

## Embodiment 3

An electrolyte and a rechargeable lithium battery were each fabricated according to substantially the same method as that in Embodiment 1, except that $Li(NiCoMn)O_2$ was used as the positive electrode active material.

## Embodiment 4

An electrolyte and a rechargeable lithium battery were each fabricated according to substantially the same method as that in Embodiment 1, except that 0.3 wt% of the first additive was applied when the electrolyte was prepared.

## Embodiment 5

An electrolyte and a rechargeable lithium battery were each fabricated according to substantially the same method as that in Embodiment 1, except that 1.0 wt% of the first additive was applied when the electrolyte was prepared.

## Embodiment 6

An electrolyte and a rechargeable lithium battery were each fabricated according to substantially the same method as that in Embodiment 1, except that 0.1 wt% of the first additive was applied when the electrolyte was prepared.

## Comparative 1

An electrolyte and a rechargeable lithium battery were each fabricated according to substantially the same method as that in Embodiment 1, except that neither the first additive represented by Chemical Formula 1A-1 nor the second additive represented by Chemical Formula 2A-1 was added when the electrolyte was prepared.

## Comparative 2

An electrolyte and a rechargeable lithium battery were each fabricated according to substantially the same method as that in Embodiment 1, except that the first additive represented by Chemical Formula 1A-1 was not added when the electrolyte was prepared.

## Comparative 3

An electrolyte and a rechargeable lithium battery were each fabricated according to substantially the same method as that in Embodiment 1, except that the second additive represented by Chemical Formula 2A-1 was not added when the electrolyte was prepared.

## Comparative 4

An electrolyte and a rechargeable lithium battery were each fabricated according to substantially the same method as that in Embodiment 1, except that a compound represented by Chemical Formula 4 was used in place of the compound represented by Chemical Formula 2A-1 as the second additive when the electrolyte was prepared.

Chemical Formula 4

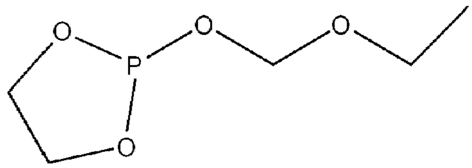

**Evaluation Example**

The following methods were used to evaluate rechargeable lithium batteries.

**Evaluation 1: Evaluation of Storage Characteristics at High Temperature (60 °C) - DCIR Increase Rate**

For each of the rechargeable lithium batteries according to the Embodiments and Comparatives, after initial direct-current internal resistance (DCIR) was measured as $\Delta V/\Delta I$ (voltage change/current change), the battery was allowed to charge its maximum energy state into a full charge state (SOC 100%) and stored in the charged state at a high temperature (60 °C) for 30 days, and then direct-current resistance was measured to calculate a DCIR increase rate (%) according to Equation 1 and the result was listed in Table 1.

Equation 1

$$\text{DCIR increase rate (\%)} = (\text{DCIR after 30 days} / \text{initial DCIR}) \times 100$$

Table 1

| Category | Initial DCIR (mΩ) | DCIR after high-temperature storage (mΩ) | DCIR increase rate after high-temperature storage (%) |
|---|---|---|---|
| Embodiment 1 | 42.38 | 51.34 | 121.1 |
| Embodiment 2 | 42.11 | 53.45 | 126.9 |
| Embodiment 3 | 41.58 | 52.13 | 125.4 |
| Embodiment 4 | 42.05 | 54.16 | 128.8 |
| Embodiment 5 | 42.52 | 54.03 | 127.1 |
| Embodiment 6 | 41.89 | 55.38 | 132.2 |
| Comparative 1 | 42.28 | 67.18 | 158.9 |
| Comparative 2 | 41.76 | 60.71 | 145.4 |
| Comparative 3 | 40.32 | 59.55 | 147.7 |
| Comparative 4 | 41.30 | 60.59 | 147.7 |

**Evaluation 2: Evaluation of Charge/Discharge Characteristics at Room Temperature**

Each of the rechargeable lithium batteries according to Embodiments and Comparatives was allowed to evaluate charge/discharge characteristics at room temperature. Each of the rechargeable lithium batteries was charged and discharged at 25 °C for 200 cycles under the condition of 0.33 C charge (CC/CV, 4.45 V, 0.025 C cut-off) and 1.0 C discharge (CC, 2.5 V cut-off).

A room-temperature capacity retention rate was calculated according to Equation 2. The result was listed in Table 2.

$$\text{Room-temperature capacity retention rate (\%)} = (\text{discharge capacity after 200 cycles} / \text{discharge capacity after 1 cycle}) \times 100 \quad \text{Equation 2}$$

Table 2

| | 200 cycles at 25°C |
|---|---|
| | Room-temperature capacity retention rate (%) |
| Embodiment 1 | 98.3 |
| Embodiment 2 | 94.2 |
| Embodiment 3 | 95.8 |
| Embodiment 4 | 93.5 |
| Embodiment 5 | 95.2 |
| Embodiment 6 | 89.8 |
| Comparative 1 | 75.3 |
| Comparative 2 | 85.5 |
| Comparative 3 | 84.3 |
| Comparative 4 | 85.8 |

**Evaluation 3: Evaluation of Charge/Discharge Characteristics at High Temperature (45 °C)**

Each of the rechargeable lithium batteries according to the Embodiments and Comparatives was allowed to evaluate charge/discharge characteristics at a high temperature. Each of the rechargeable lithium batteries was charged and discharged at 45 °C for 200 cycles under the condition of 0.33 C charge (CC/CV, 4.45 V, 0.025 C cut-off) and 1.0 C discharge (CC, 2.5 V cut-off).

A high-temperature capacity retention rate was calculated according to Equation 3. The result was listed in Table 3.

High-temperature capacity retention rate (%) = (discharge capacity after 200 cycles / discharge capacity after 1 cycle) × 100 Equation 3

Table 3

| | 200 cycles at 45 °C |
|---|---|
| | High-temperature capacity retention rate (%) |
| Embodiment 1 | 86.1 |
| Embodiment 2 | 80.9 |
| Embodiment 3 | 81.2 |
| Embodiment 4 | 81.1 |
| Embodiment 5 | 82.3 |
| Embodiment 6 | 78.6 |
| Comparative 1 | 70.9 |
| Comparative 2 | 78.1 |
| Comparative 3 | 75.2 |
| Comparative 4 | 77.5 |

**Comprehensive Evaluation**

Referring to Table 1, it may be ascertained that there was an improvement in DCIR increase rate during storage at a high temperature (60 °C) in each of the examples each using the electrolyte according to an embodiment of the present

disclosure, compared to the electrolyte used in each of the comparatives.

Referring to Tables 2 and 3, it may be ascertained that there was an improvement in capacity retention rate based on charge/discharge cycles at room temperature (25 °C) and high temperature (45 °C) in each of the examples each using the electrolyte according to an embodiment of the present disclosure, compared to the electrolyte used in each of the comparatives.

In addition, it may be ascertained that the electrolyte according to an embodiment of the present disclosure, if (e.g., when) combined with the positive electrode in which lithium iron phosphate was used as an active material, exhibited excellent cycle-life characteristics and cycle-life efficiency at room temperature (25 °C) and high temperature (45 °C).

In an electrolyte according to an embodiment, a compound including a - $PO_2F$ functional group and a phosphate-based compound substituted with a methoxy group may be combined to be used as an additive to exhibit an improvement in cycle-life characteristics and stability under high temperatures during the activation of a rechargeable lithium battery.

## Claims

**1.** An electrolyte for a rechargeable lithium battery (100), the electrolyte comprising:

a non-aqueous organic solvent;
a lithium salt;
a first additive represented by Chemical Formula 1; and
a second additive represented by Chemical Formula 2,

Chemical Formula 1

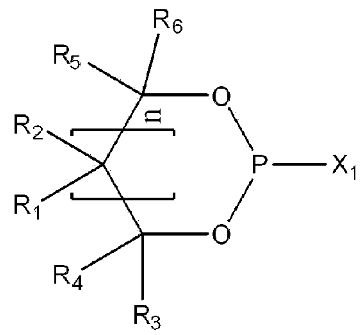

Chemical Formula 2

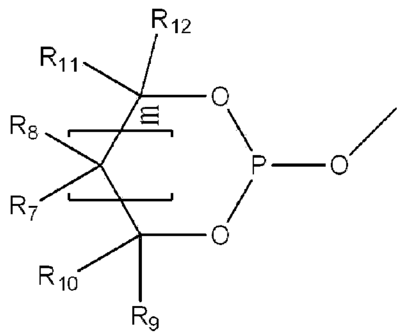

wherein, in Chemical Formula 1,
$X_1$ is a fluoro group, a chloro group, a bromo group, or an iodo group,
$R_1$ to $R_6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1,
wherein, in Chemical Formula 2,

$R_7$ to $R_{12}$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
m is an integer of 0 or 1,
wherein the term "substituted" indicates that at least one hydrogen is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

**2.** The electrolyte as claimed in claim 1, wherein Chemical Formula 1 is represented by Chemical Formula 1A or Chemical Formula 1B,

Chemical Formula 1A

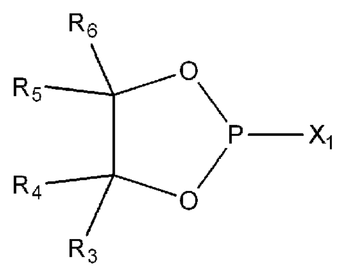

Chemical Formula 1B

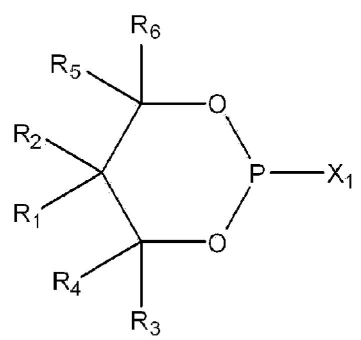

wherein, in Chemical Formula 1A and Chemical Formula 1B,
$X_1$ is a fluoro group, a chloro group, a bromo group, or an iodo group, and
$R_1$ to $R_6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**3.** The electrolyte as claimed in claim 2, wherein, in Chemical Formula 1A,

each of $R_3$ and $R_4$ is hydrogen, and
at least one selected from $R_5$ and $R_6$ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**4.** The electrolyte as claimed in claim 1, wherein the first additive represented by Chemical Formula 1 is at least one selected from compounds listed in Group 1,

Group 1

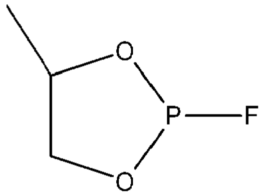

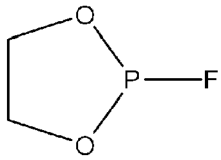

.

5. The electrolyte as claimed in any one of the preceding claims, wherein Chemical Formula 2 is represented by Chemical Formula 2A-1 or Chemical Formula 2B-1,

Chemical Formula 2A-1

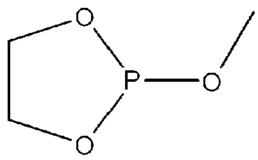

Chemical Formula 2B-1

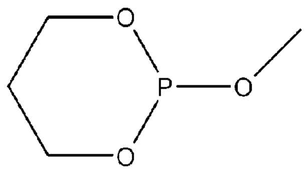

.

6. The electrolyte as claimed in any one of the preceding claims, wherein the first additive is included an amount of 0.01 wt% to 5 wt% relative to a total weight of the electrolyte.

7. The electrolyte as claimed in any one of the preceding claims, wherein the second additive is included an amount of 0.01 wt% to 5 wt% relative to a total weight of the electrolyte.

8. The electrolyte as claimed in any one of the preceding claims, wherein an amount ratio of the second additive represented by Chemical Formula 2 to the first additive represented by Chemical Formula 1 is in a range of 1:5 to 5:1.

9. The electrolyte as claimed in any one of the preceding claims, wherein the non-aqueous organic solvent includes at least one selected from ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), and butylene carbonate (BC).

10. The electrolyte as claimed in any one of the preceding claims, wherein the lithium salt includes one or more of $LiPF_6$, $LiClO_4$, $LiBF_4$, lithium bis(fluorosulfonyl)imide (LiFSI), LiTFSI, $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, or $LiC_4F_9SO_3$.

11. The electrolyte as claimed in any one of the preceding claims, wherein a concentration of the lithium salt is in a range of 0.1 M to 2.0 M.

12. A rechargeable lithium battery (100), comprising:

a positive electrode (10) that comprises a positive electrode active material;
a negative electrode (20) that comprises a negative electrode active material; and
the electrolyte as claimed in claim 1.

13. The rechargeable lithium battery (100) as claimed in claim 12, wherein the positive electrode active material

comprises lithium composite oxide represented by Chemical Formula 3,

Chemical Formula 3 $Li_xM^1_yM^2_zM^3_{1-y-z}O_{2-a}X_a$

wherein, in Chemical Formula 3,
$0.5 \leq x \leq 1.8$, $0 \leq a \leq 0.05$, $0 < y \leq 1$, $0 \leq z \leq 1$, and $0 \leq y+z \leq 1$,

$M^1$, $M^2$, and $M^3$ each independently include at least one element selected from metals such as Ni, Co, Mn, Al, B, Ba, Ca, Ce, Cr, Fe, Mo, Nb, Si, Sr, Mg, Ti, V, W, Zr, La, and a combination thereof, and
X includes at least one element selected from F, S, P, and Cl.

**14.** The rechargeable lithium battery (100) as claimed in claim 12 or 13, wherein the positive electrode active material comprises a lithium-iron-phosphate-based compound.

**15.** The rechargeable lithium battery (100) as claimed in any one of claims 12 to 14, wherein the negative electrode active material comprises at least one selected from graphite and a silicon composite.

FIG. 1

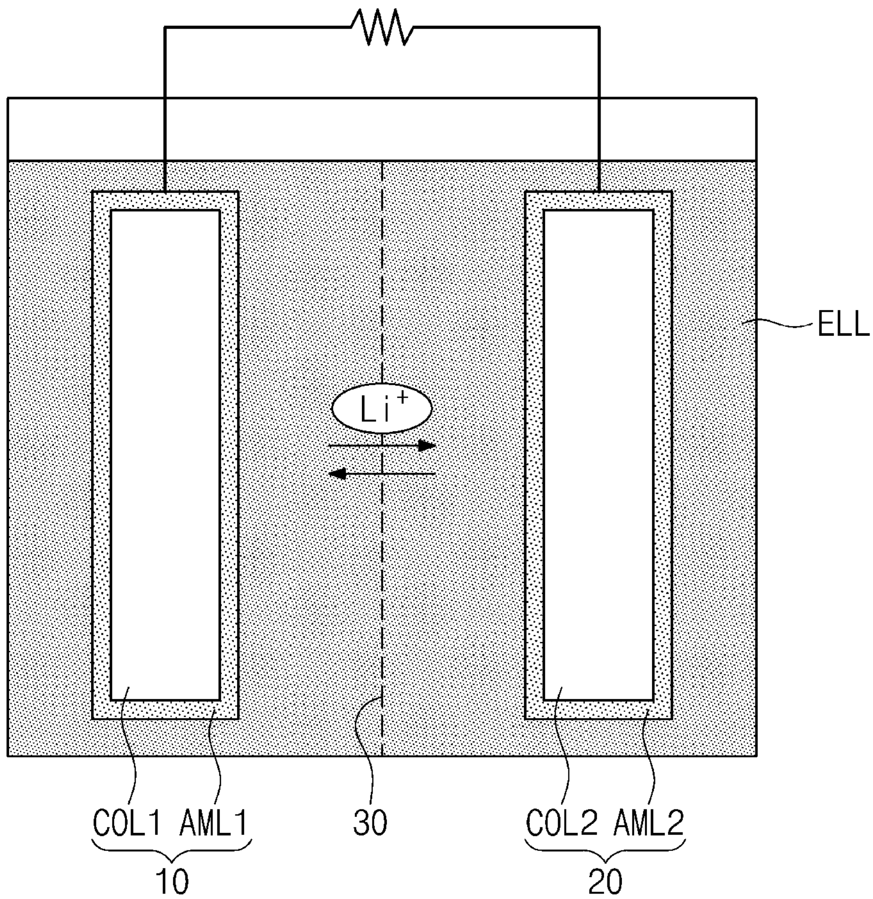

FIG. 2

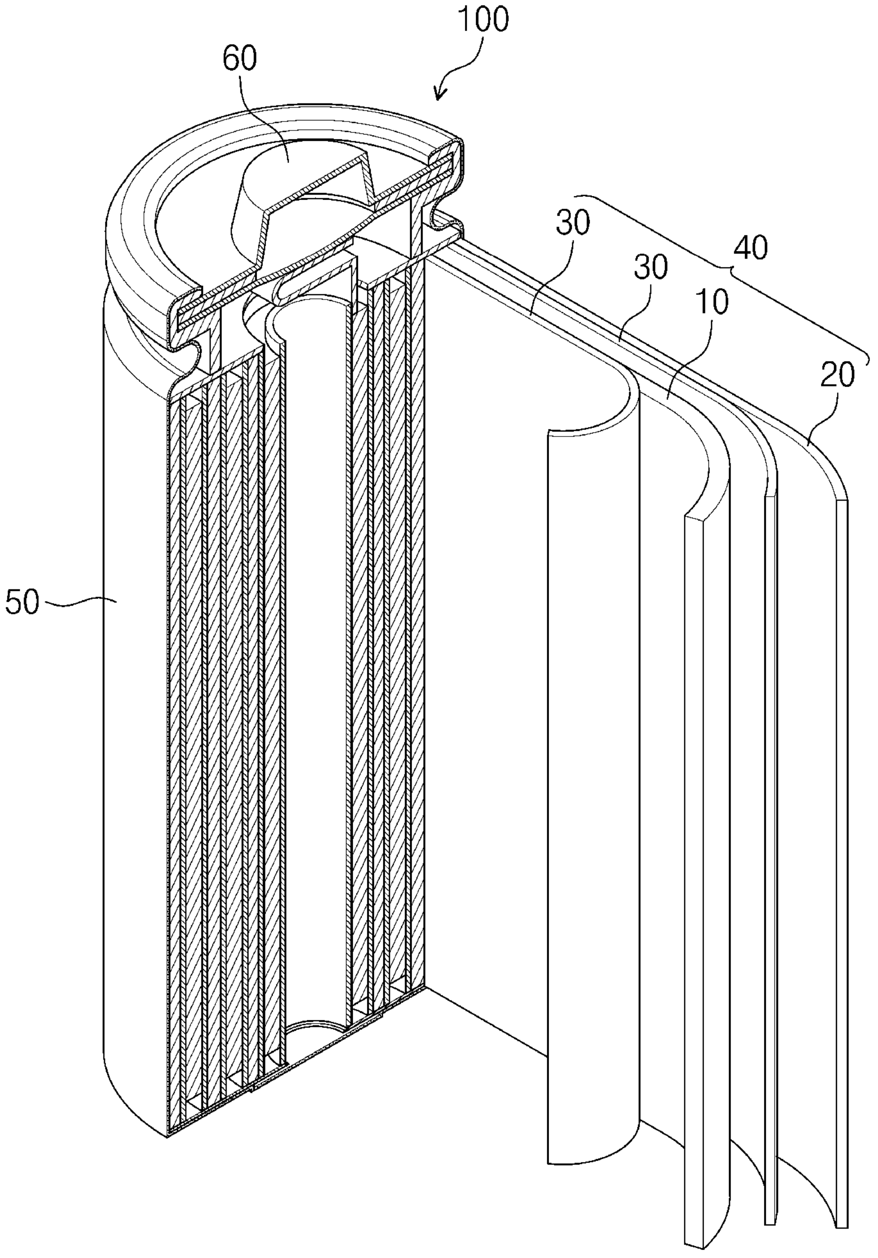

FIG. 3

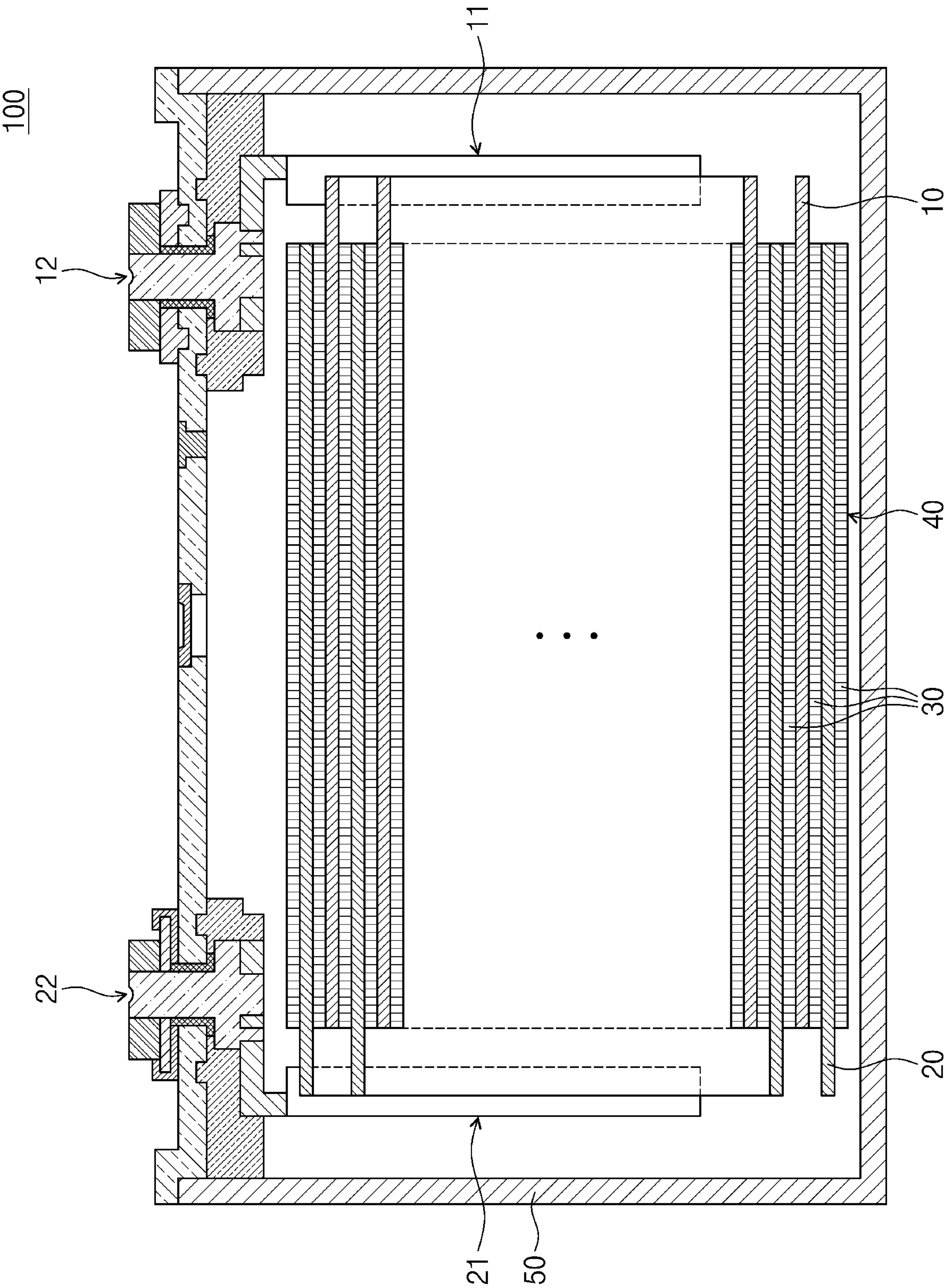

FIG. 4

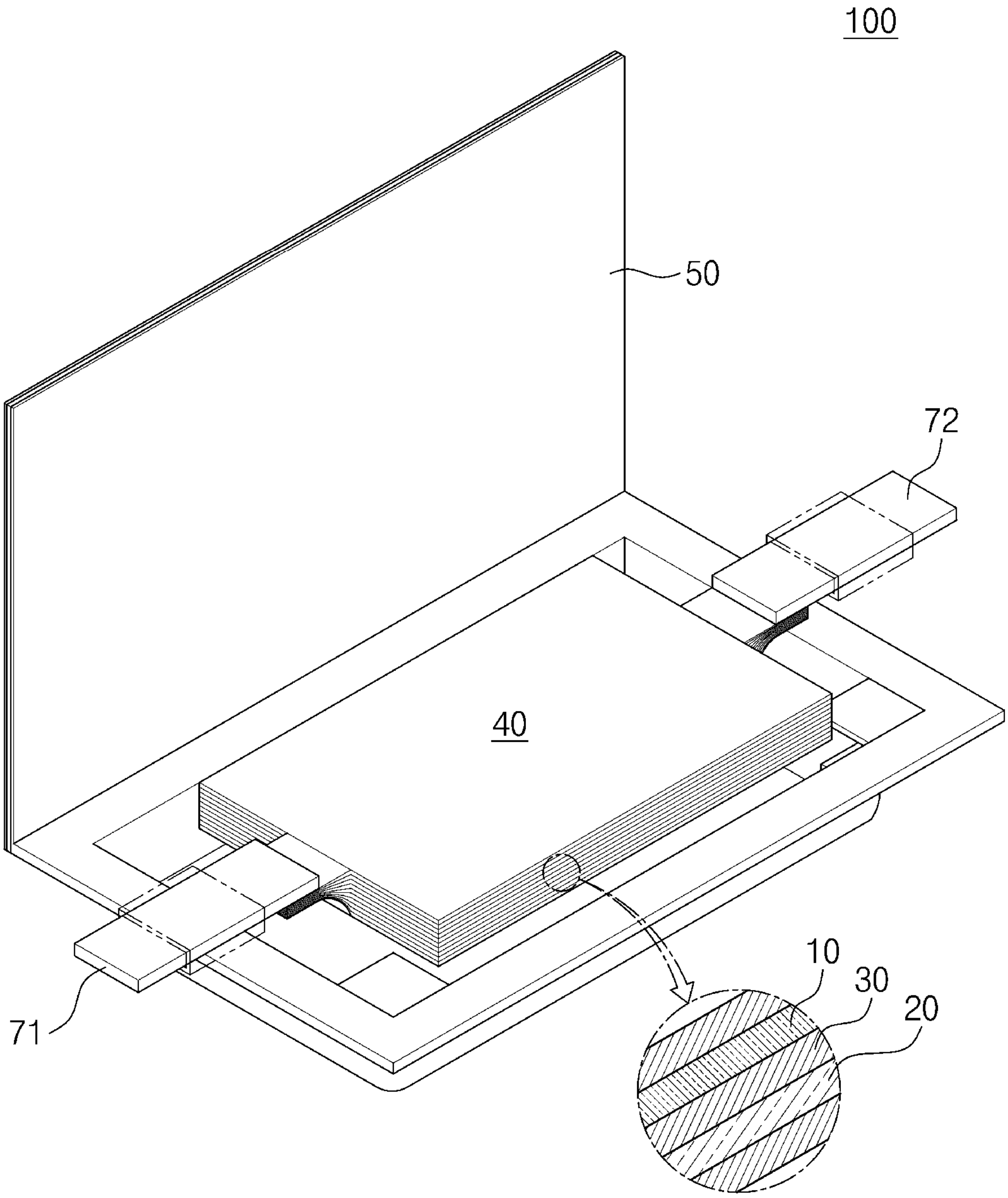

FIG. 5

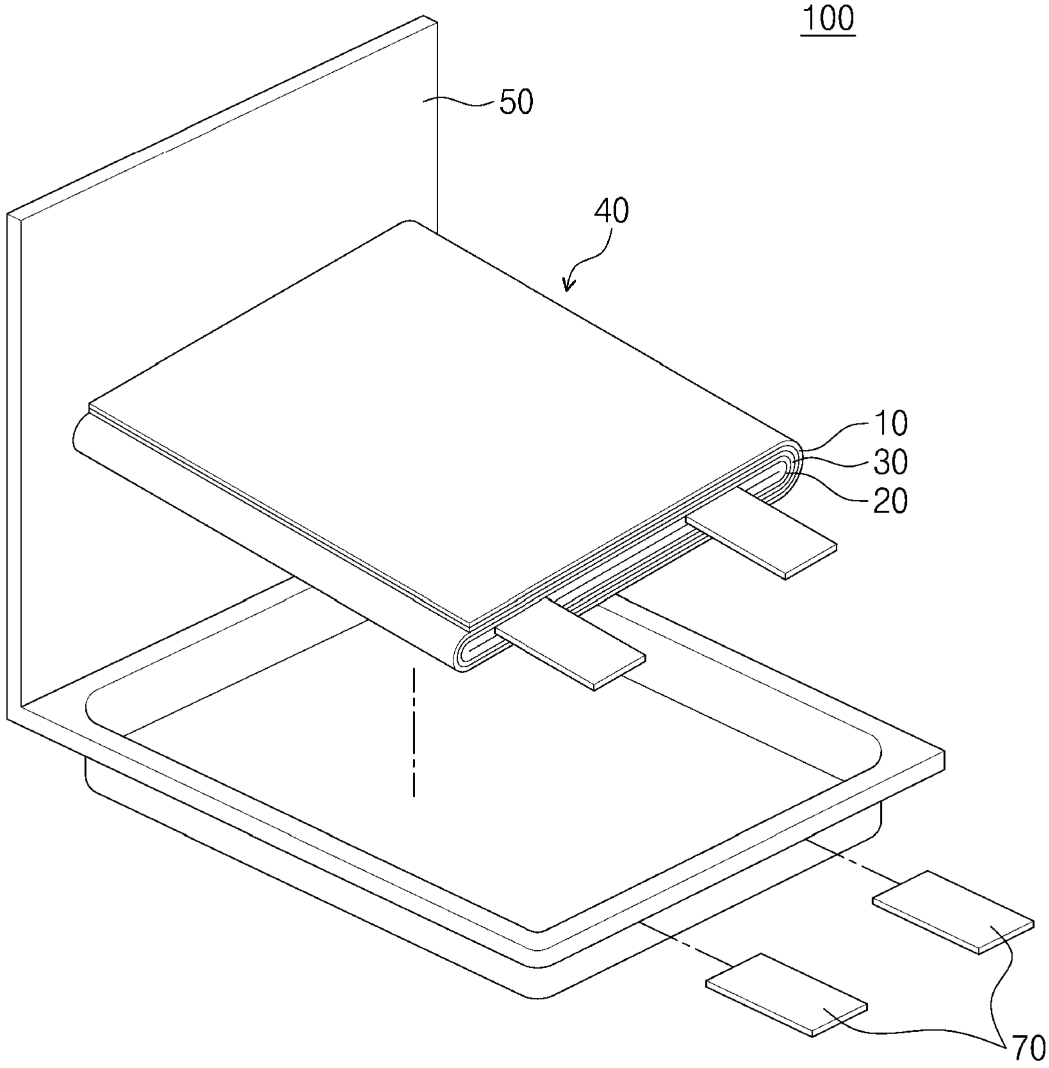

Europäisches Patentamt
European Patent Office
Office européen des brevets

# EUROPEAN SEARCH REPORT

Application Number
EP 25 17 4426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 261 975 A1 (SAMSUNG SDI CO LTD [KR]) 18 October 2023 (2023-10-18)<br>* paragraphs [0007], [0008], [0037] - [0062], [0076] - [0086], [0091] - [0097], [0124] - [0136]; examples 1-6 *<br>----- | 1-15 | INV.<br>H01M4/131<br>H01M4/133<br>H01M4/134<br>H01M10/0525<br>H01M10/0564<br>H01M10/0567<br>H01M4/505<br>H01M4/525<br>H01M4/587<br><br>ADD.<br>H01M10/42 |
| Y | KR 2023 0031126 A (SAMSUNG SDI CO LTD [KR]) 7 March 2023 (2023-03-07)<br>* paragraphs [0008], [0009], [0051] - [0076], [0080] - [0086], [0097], [0100] - [0133], [0138] - [0154], [0167] - [0179], [0186] - [0199]; examples 1-8 *<br>----- | 1-15 | |
| Y | CN 117 996 192 A (SVOLT ENERGY TECH CO LTD) 7 May 2024 (2024-05-07)<br>* pages 2-7;<br>examples 1, 4-9 *<br>----- | 1-15 | |
| Y | CN 108 365 265 A (ZHONGSHAN HONGYI NEW MAT CO LTD) 3 August 2018 (2018-08-03)<br>* 5,6,8,10,12,14,21-28,32-34,38,39,63-66,95-98;<br>tables 1-3 *<br>----- | 1-15 | TECHNICAL FIELDS SEARCHED (IPC)<br>H01M |

The present search report has been drawn up for all claims

| Place of search | Date of completion of the search | Examiner |
|---|---|---|
| The Hague | 7 November 2025 | Levecque, Pieter |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 4426

This annex lists the patent family members relating to the patent documents cited in the above-mentioned European search report. The members are as contained in the European Patent Office EDP file on
The European Patent Office is in no way liable for these particulars which are merely given for the purpose of information.

07-11-2025

| Patent document cited in search report | Publication date | Patent family member(s) | Publication date |
|---|---|---|---|
| EP 4261975 A1 | 18-10-2023 | CN 116914229 A | 20-10-2023 |
| | | EP 4261975 A1 | 18-10-2023 |
| | | KR 20230146375 A | 19-10-2023 |
| | | US 2023327198 A1 | 12-10-2023 |
| KR 20230031126 A | 07-03-2023 | NONE | |
| CN 117996192 A | 07-05-2024 | CN 117996192 A | 07-05-2024 |
| | | WO 2025180503 A1 | 04-09-2025 |
| CN 108365265 A | 03-08-2018 | NONE | |

EPO FORM P0459

For more details about this annex : see Official Journal of the European Patent Office, No. 12/82